# DEMANDE DE BREVET EUROPEEN

(11) **EP 2 353 351 A1**
(43) Date de publication de la demande: **10.08.2011**
(21) Numéro de dépôt: 11153533.2
(22) Date de dépôt: 07.02.2011
(51) Int. Cl.: A01B 3/30

(54) **Charrue semi-portée réversible hors raie**

(30) Priorité: 09.02.2010 FR 1050879
(71) Demandeur: Kuhn-Huard S.A., 44142 Châteaubriant (FR)
(72) Inventeur: Perrinel, Christian, 44110, Chateaubriant (FR); Herault, Vincent, 44470, Mauves sur Loire (FR); Cueille, Laurent, 44110, Erbray (FR)
(74) Mandataire: Andres, Jean-Claude

(57) **Abrégé**

La présente invention concerne une charrue (1) semi-portée réversible hors-raie destinée à être reliée à un tracteur (2) au moyen d'une tête d'attelage (3) et comportant un bâti (6) portant des corps de labour (7), un timon (8) et un dispositif de retournement (9), ledit bâti (6) s'appuyant sur le sol par l'intermédiaire d'au moins une roue (10) apte à déplacer en hauteur la partie arrière dudit bâti (6).

La charrue est remarquable en ce qu'elle présente un moyen supplémentaire (20) permettant de lever respectivement d'abaisser la partie avant dudit bâti (6) lors de l'opération de sortie de terre respectivement de mise en terre desdits corps de labour (7) et que ledit moyen supplémentaire (20) sert de roue de contrôle de profondeur en roulant sur le terrain non labouré durant le labour.

## Description

La présente invention se rapporte au domaine technique général du machinisme agricole et en particulier au domaine des charrues. L'invention concerne une charrue semi-portée réversible hors-raie destinée à être reliée à un tracteur au moyen d'une tête d'attelage et comportant un bâti portant des corps de labour, un timon et un dispositif de retournement, ledit bâti s'appuyant sur le sol par l'intermédiaire d'au moins une roue apte à déplacer en hauteur la partie arrière dudit bâti.

Une telle charrue semi-portée présente un bâti s'appuyant sur le sol par l'intermédiaire d'un chariot avec deux roues. Le bâti porte douze corps de labour et permet de travailler une très grande largeur, elle présente donc un encombrement important au travail. Cette charrue est réversible, elle comporte un dispositif de retournement et un timon. Ainsi les corps de labour droit et gauche sont mis successivement en service par rotation du bâti d'un demi-tour autour d'un axe longitudinal formé par le timon, axe longitudinal autour duquel on effectue la manoeuvre de retournement. Pour diminuer les efforts lors de la manoeuvre de retournement, des moyens permettent de recentrer le bâti de la charrue en le ramenant vers l'axe longitudinal. Cette charrue permet un labour hors-raie, elle comporte des bielles permettant de déporter le bâti par rapport au timon. Pour assurer la profondeur de travail de ses corps avant, la charrue comporte une roue de contrôle de profondeur disposée en avant du premier corps. La roue de régulation est fixée sur le dispositif de retournement de manière à pouvoir contrôler la profondeur de travail des corps dans les deux positions : labour à droite et labour à gauche.

En fin de champ lorsque le bâti est soulevé pour effectuer la manoeuvre de retournement, les corps de labour sortent de terre et la roue de contrôle de profondeur s'éloigne du sol. Comme la charrue travaille en hors-raie, la structure de la charrue et notamment ses bielles de déport encaissent des efforts importants lorsque les corps de labour sortent de terre. Ces efforts sont importants d'une part car la partie avant du bâti porte un nombre important de corps et d'autre part car le bâti est déporté latéralement. Pour réduire le balourd lors de la manoeuvre de retournement, les bielles de déport sont repliées via un vérin de déport qui se rétracte pour rapprocher le bâti du timon et donc de l'axe longitudinal pour le retournement.

Par ailleurs, lorsque le bâti est soulevé et que les corps sortent de terre, des efforts importants ont tendance à entraîner le bâti dans le sol dans ce sens que les corps tendent à s'enfoncer dans la terre. La plupart des tracteurs n'ayant pas de système de relevage à double effet, le bras de relevage opposé à l'avant de la charrue a tendance à remonter lorsque le bâti se soulève ce qui a pour effet de faire redescendre les corps avant de la charrue. Ainsi, la charrue tend à basculer autour du bras de relevage disposé du côté de la charrue et à ramener à nouveau les corps plus près du sol. Le relevage du bâti est donc insuffisant et le dégagement par rapport au sol est réduit.

Ces efforts créent un balourd important car le centre de gravité de la charrue n'est pas sur son axe longitudinal de rotation et la structure de la charrue doit encaisser des efforts importants. Le déséquilibre créé par le bâti et les corps s'étendant d'un côté de l'axe longitudinal, entraîne un déséquilibre au niveau du système de relevage du tracteur car l'un des bras de relevage doit encaisser des efforts plus importants lors du relevage du bâti hors du sol.

La présente invention a pour but de remédier aux inconvénients précités. Elle doit notamment proposer une charrue semi-portée réversible hors-raie dont les efforts sur la structure sont réduits et la profondeur de labour devant être constante tout au long du travail. La solution doit être simple et peu onéreuse.

A cet effet, une importante caractéristique de l'invention consiste en ce que ladite charrue présente un moyen supplémentaire permettant de lever, respectivement d'abaisser la partie avant dudit bâti lors de l'opération de sortie de terre, respectivement de mise en terre desdits corps de labour et que ledit moyen supplémentaire sert de roue de contrôle de profondeur en roulant sur le terrain non labouré durant le labour. Grâce à ce moyen supplémentaire, la structure de la charrue est soulagée et la charge verticale supportée par le tracteur est mieux répartie sur les deux bras de relevage.

Selon une autre importante caractéristique, le moyen supplémentaire reste en appui sur le sol lors des demi-tours en fin de champ. Ainsi, le moyen supplémentaire permet un appui au sol supplémentaire lorsque le tracteur effectue les demi-tours. Pour suivre les changements de direction lors de ces demi-tours, le moyen supplémentaire est libre en rotation autour d'une articulation d'axe vertical.

Avantageusement le moyen supplémentaire reste au sol pour les opérations de repliage respectivement de dépliage de la charrue. En restant au sol lorsque le bâti est rapproché ou éloigné du timon, les efforts sur la structure de la charrue sont réduits.

Pour assister le système de relevage du tracteur et le chariot, le moyen supplémentaire est monté sur une partie tournante de la charrue. D'une manière avantageuse, le moyen supplémentaire servant de roue de contrôle de profondeur durant le labour s'étend sensiblement dans le voisinage du premier corps. Le moyen supplémentaire est monté de préférence sur le bâti. Cette position assure un très bon report de charge lorsque le bâti est soulevé puisque le moyen supplémentaire constitue un point d'appui au sol déporté.

D'autres caractéristiques et avantages de l'invention se dégageront de la description qui va suivre en regard des dessins annexés qui ne sont donnés qu'à titre d'exemples non limitatifs de l'invention avec référence. Sur ces dessins :
- la **figure 1** représente, en vue de dessus, une charrue selon la présente invention,
- la **figure 2** est une vue latérale de la charrue attelée à un tracteur au cours de l'opération "sortie de terre",
- la **figure 3** est une vue de dessus de la charrue lors de l'opération "repliage",
- la **figure 4** est une vue de côté de la charrue dans la configuration de transport.

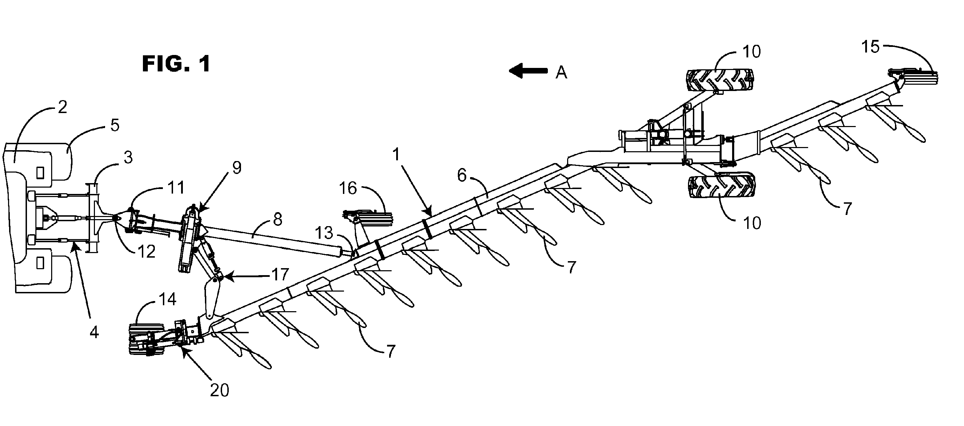

La machine agricole représentée sur la figure 1 est une charrue (1). La charrue (1) est destinée à être reliée à un tracteur (2) au moyen d'une tête d'attelage (3). La charrue (1) est reliée en particulier au système de relevage (4) du tracteur (2). Seule la partie arrière du tracteur (2) et ses roues arrière (5) sont visibles sur les figures. Le tracteur tire la charrue (1) suivant une direction et un sens d'avance indiqué par la flèche (A). Dans la suite de la description, les notions suivantes "avant", "arrière" et "devant", "derrière" sont définies par rapport au sens d'avance (A).

Il s'agit d'une charrue semi-portée capable de labourer une très large bande de terrain. La charrue (1) comporte un bâti (6) sur lequel sont montés des corps de labour (7), un timon (8) et un dispositif de retournement (9). Le bâti (6) s'appuie, dans sa partie arrière, sur le sol par l'intermédiaire d'une ou de deux roues (10). Ladite au moins une roue (10) est apte à déplacer la partie arrière du bâti (6) en hauteur. Dans l'exemple de la figure 1, la charrue (1) est réversible et équipée d'un grand nombre de corps de labour (7), par exemple douze. Elle repose sur le sol au moyen d'un chariot comportant deux roues (10). Ce chariot est muni d'un vérin susceptible de déplacer la partie arrière du bâti (6) entre une position basse de travail et une position haute de transport, et vice versa. Le timon (8) est relié d'une part à la tête d'attelage (3) via un axe vertical (11) suivi d'un axe transversal horizontal (12) et d'autre part au bâti (6). L'axe vertical (11) permet un meilleur suivi du tracteur (2) notamment dans les fourrières et l'axe transversal (12) autorise un débattement du bâti (6) pour mieux suivre le relief du terrain. Le timon (8) est relié au bâti (6) au moyen d'une articulation (13) d'axe sensiblement vertical.

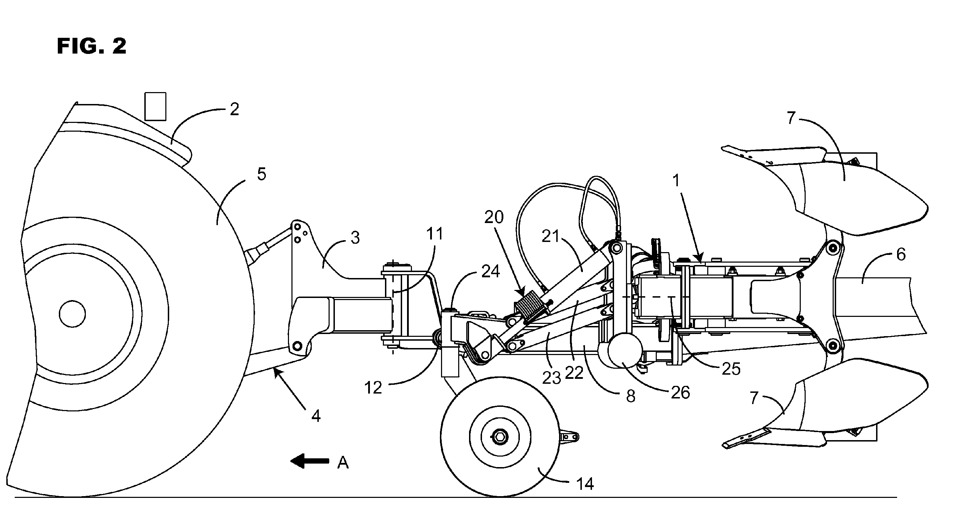

D'après la figure 2, la charrue (1) est réversible. Ainsi, sous l'action du dispositif de retournement (9), le bâti (6) est capable de pivoter par rapport à un axe longitudinal matérialisé par le timon (8). Cette charrue (1) de grande largeur comporte plusieurs roues de contrôle de profondeur des corps de labour (7), elles sont réparties sur le bâti (6). Une roue avant de contrôle de profondeur (14) s'étend dans la partie avant du bâti (6), elle contrôle la profondeur de travail des corps de labour (7) avant. Cette roue avant (14) circule sur le guéret c'est-à-dire que la roue roule sur la partie de terrain non encore travaillée par la charrue. Dans cette position en labour hors-raie, la profondeur de labour est déterminée et réglée par rapport au bâti (6) via la roue avant de contrôle de profondeur (14) au moyen d'un système de réglage de la hauteur de la roue par rapport au bâti (6). Elle est disposée dans le voisinage du premier corps et notamment à l'avant de celui-ci. Dans la partie arrière du bâti (6), la profondeur de labour est contrôlée par une roue arrière (15). Pour les autres corps de labour (7), la profondeur de labour est contrôlée d'une part par les roues (10) du chariot et d'autre part par une roue intermédiaire (16). Cette roue intermédiaire (16) est disposée entre le chariot et la roue avant (14), de préférence dans le voisinage de l'articulation verticale (13).

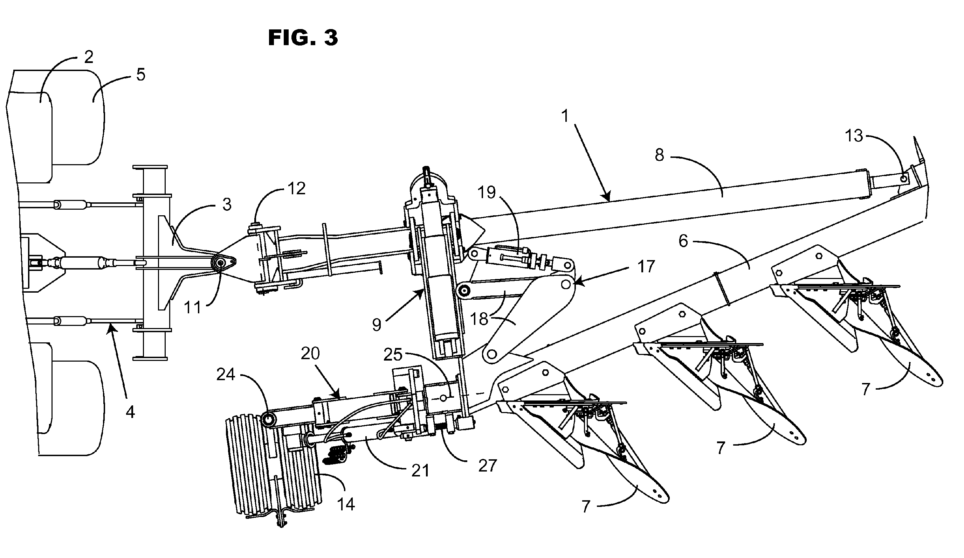

La charrue (1) comporte également un mécanisme (17) de repliage et de dépliage. Ce mécanisme (17) permet à la charrue (1) d'effectuer ce qu'on appelle un labour hors-raie, c'est-à-dire un labour pour lequel le tracteur (2) évolue avec ses quatre roues sur le terrain non labouré qui est encore pourvu de végétation. Le mécanisme (17) s'étend entre le bâti (6) et le timon (8) et est composé de bielles de déport (18) et d'un vérin de déport (19). Grâce aux bielles (18) et au vérin (19), le bâti (6) peut être rapproché ou éloigné du timon (8) en pivotant autour de l'articulation verticale (13). Cette opération est aussi appelée "repliage" et "dépliage" du bâti (6). Le bâti (6) est avantageusement rapproché du timon (8) pour positionner le premier corps à proximité du tracteur (2) pour faciliter la manoeuvre de retournement. Sur la figure 1, on peut voir que la charrue (1) est en position de travail hors-raie, le bâti (6) est déporté par rapport au tracteur (2). Les bielles de déport (18) sont ouvertes, l'angle d'ouverture est important. La figure 3 représente la charrue (1) au cours de l'opération de repliage du bâti (6), les bielles de déport (18) se replient sous l'action du vérin de déport (19).

Selon une importante caractéristique de l'invention, la charrue (1) présente un moyen supplémentaire (20) permettant de lever respectivement d'abaisser la partie avant dudit bâti (6) lors de l'opération de sortie de terre respectivement de mise en terre desdits corps de labour (7) et servant de roue de contrôle de profondeur en roulant sur le terrain non labouré durant le labour. Ce moyen supplémentaire (20) est notamment destiné à assister le système de relevage (4) du tracteur (2) pour la sortie de terre des corps de labour (7). Le moyen supplémentaire (20) est donc monté sur la charrue (1) et de préférence sur une partie tournante de celle-ci. Cette partie tournante est par exemple le bâti (6) de la charrue (1). D'une manière avantageuse, le moyen supplémentaire (20) est monté à l'avant du bâti (6) compte tenu de la direction d'avance (A). Le dispositif de retournement (9) et le mécanisme de repliage/dépliage (17) sont également des parties tournantes de la charrue (1). Grâce à ce moyen supplémentaire (20), la charge verticale supportée par le tracteur (2) est toujours répartie sur les deux bras du système de relevage (4) lors de la sortie de terre respectivement l'entrée en terre des corps (7). Il n'y a donc plus de déséquilibre lié à l'effet bascule autour du bras de relevage côté charrue. Les efforts sur la structure de la charrue (1) sont de ce fait également soulagés. Le moyen supplémentaire (20) est configuré de telle sorte qu'il permette un déplacement en hauteur parallèlement au sol. Le moyen supplémentaire (20) est commandé par au moins un actionneur (21), tel qu'un vérin hydraulique. L'actionneur (21) est avantageusement un vérin à double effet.

Selon une autre importante caractéristique de l'invention, le moyen supplémentaire (20) reste en appui sur le sol lors des demi-tours. Pour accompagner le tracteur (2) durant les fourrières, le moyen supplémentaire (20) est libre en rotation autour d'une articulation d'axe sensiblement vertical (24). Le moyen supplémentaire (20) reste aussi au sol pour les opérations de repliage et de dépliage. Il reste notamment au sol lors de la sortie de terre des corps (7), lors du repliage du bâti (6) puis lors du dépliage du bâti (6) et de l'entrée en terre des corps (7). Le moyen supplémentaire (20) est et reste en appui sur le sol pendant les demi-tours à l'exception de la manoeuvre de retournement.

D'une manière particulièrement avantageuse, ce moyen supplémentaire (20) est utilisé comme roue de contrôle de profondeur durant le labour. Il s'étend sensiblement dans le voisinage du premier corps (7) et permet de contrôler la profondeur de travail de la partie avant dudit bâti (6). Le moyen supplémentaire (20) réalise la roue de contrôle de profondeur avant (14) et roule sur le terrain non labouré en labour hors-raie. Ainsi la largeur de la roue avant de contrôle de profondeur (14) n'est pas limitée par la largeur de coupe et les risques de marquage du labour sont réduits puisque la roue ne circule pas dans le sillon du dernier corps réalisé au passage précédent.

Dans l'exemple de réalisation, le moyen supplémentaire (20) est lié au bâti (6) au moyen d'une bielle supérieure (22) et d'une bielle inférieure (23). Les bielles (22, 23) sont articulées et présentent des axes respectifs sensiblement perpendiculaires à la direction d'avance (A). Ces bielles (22, 23) sont disposées de manière à réaliser un quadrilatère déformable verticalement. Le quadrilatère déformable est un parallélogramme. Ainsi, l'actionneur (21) permet un déplacement du moyen supplémentaire (20) parallèlement au sol. Grâce à l'actionneur (21), le moyen supplémentaire (20) reste sur le sol durant toute la phase de demi-tour de la charrue (1) à l'exception de la manoeuvre de retournement. La figure 2 représente l'opération de sortie de terre, le moyen supplémentaire (20) assiste le relevage des corps de labour (7) hors du sol.

Selon un autre exemple de réalisation, le moyen supplémentaire (20) est lié au bâti (6) au moyen d'une glissière. La glissière permettant également un déplacement en hauteur parallèlement au sol.

Pour suivre la direction du timon (8) lors des demi-tours, le moyen supplémentaire (20) est monté au moyen d'une articulation d'axe sensiblement vertical (24), le moyen supplémentaire (20) est avantageusement libre en rotation autour de cet axe vertical (24). Ainsi, il s'oriente automatiquement pour suivre la direction (A) du tracteur (2). Selon la figure 1, la roue avant de contrôle de profondeur (14) du moyen supplémentaire (20) est disposée en avant du premier corps, elle contrôle la profondeur de travail des corps (7) à l'avant du bâti (6). Elle est orientée selon la direction d'avance (A), elle est sensiblement parallèle aux contreseps des corps de labour (7). En labour hors-raie, elle est amenée à rouler sur le terrain non labouré.

La figure 3 montre le moyen supplémentaire (20) durant l'opération de repliage du bâti (6). Comme la roue (14) pivote autour de l'axe vertical (24), elle change d'orientation lors du repliage du bâti (6). Elle est alors dirigée sensiblement perpendiculairement à la direction d'avance (A). En pratique lorsque le tracteur arrive au bout de champ, il ne s'arrête pas en effectuant le demi-tour. Il continu à rouler pendant que les corps (7) sortent de terre, que le bâti (6) se replie pour le retournement, qu'il se déplie pour que les corps de labour (7) sont positionnés pour reprendre le travail. Durant le demi-tour, le moyen supplémentaire (20) avec la roue avant de contrôle de profondeur (14), qui est restée au sol la plupart du temps, suit exactement le trajet du tracteur (2). Le moyen supplémentaire (20) étant capable de pivoter d'au moins 180° autour de l'axe vertical (24). De préférence, la position de l'axe vertical (24) est centrée par rapport au moyen supplémentaire (20). L'axe vertical (24) est centré par rapport à la roue de contrôle de profondeur avant (14) ce qui lui permet de rouler pour s'orienter dans la direction (A) du tracteur (2) sans riper.

Avec une charrue (1) telle que représentée sur les figures, il est nécessaire de rapprocher le bâti (6) du timon (8) préalablement aux manoeuvres de retournement afin d'éviter des interférences. Le repliage du bâti (6) permet aussi avantageusement de réduire les efforts au niveau de la structure de la charrue (1), au niveau du système de relevage (4) du tracteur (2) et notamment pour le dispositif de retournement (9). Une telle opération de repliage/dépliage n'est pas nécessaire lorsque la structure et le dispositif de retournement (9) de la charrue (1) sont largement dimensionnés.

Le moyen supplémentaire (20) via sa roue avant de contrôle de profondeur (14) est destiné à contrôler la profondeur de travail des corps dans les deux positions du bâti (6) : labour à droite et labour à gauche. Pour cela, au moins une roue avant de contrôle de profondeur (14) est nécessaire. Dans l'exemple de réalisation, la roue avant de contrôle de profondeur (14) est composée de roues jumelles montées sur un même axe de rotation et disposées côte à côte. La roue avant de contrôle de profondeur (14) est donc liée au bâti (6) au moyen d'une articulation (25) d'axe sensiblement horizontal et parallèle à la direction d'avance (A). Pour s'assurer que lors du passage d'une position de travail à l'autre position de travail, la roue avant de contrôle de profondeur (14) soit toujours dirigée vers le sol, elle est associée à une masse ou un contrepoids (26). Lors du retournement et indépendamment du bâti (6), la roue avant de contrôle de profondeur (14) ne change pas de position, elle reste en regard du sol.

Dans un exemple de réalisation non représenté, le moyen supplémentaire (20) est articulé autour d'un axe sensiblement horizontal et perpendiculaire à la direction d'avance (A). Cet axe perpendiculaire permet un réglage de la profondeur de travail.

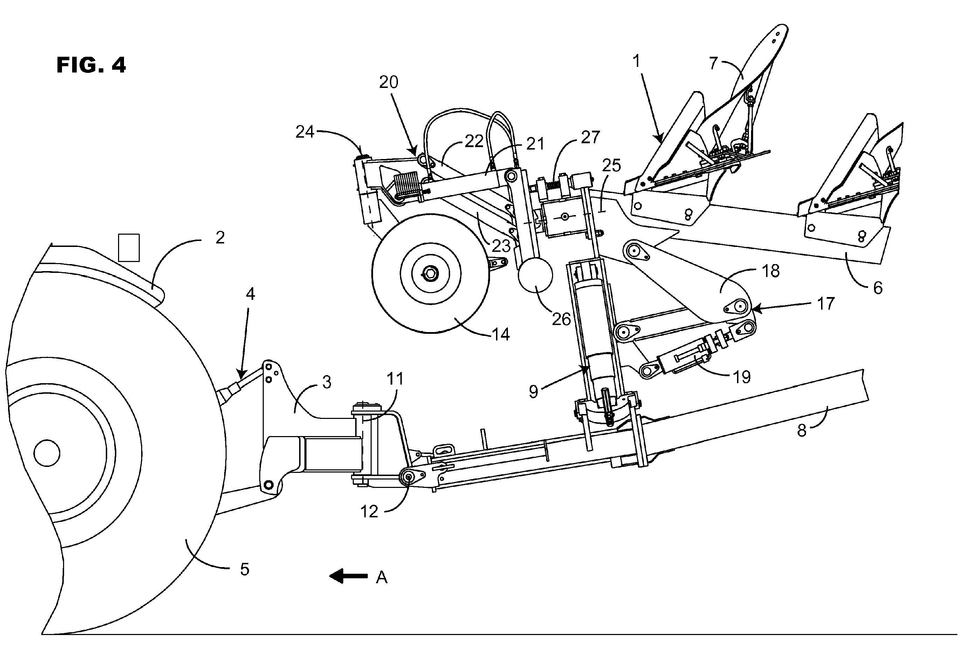

Dans la configuration de transport représentée à la figure 4, la rotation de la roue avant de contrôle de profondeur (14) autour de ladite articulation horizontale (25) du bâti (6) est bloquée à l'aide d'un verrou (27). Ce verrou (27) est commandé manuellement ou automatiquement.

Selon un exemple de réalisation non représenté, la roue avant de contrôle de profondeur (14) est composée d'une roue double. Les deux roues sont alors disposées symétriquement par rapport au bâti (6) et chacune contrôle une des positions de labour. Dans ce cas les roues sont montées de manière fixe sur le bâti (6). L'articulation horizontale (25) et le contrepoids ne sont plus nécessaires.

Dans une alternative non représentée, le moyen supplémentaire (20) est monté sur le mécanisme de repliage/dépliage (17) de la charrue (1). Lors du retournement, le mécanisme de repliage/dépliage (17) tourne avec le bâti (6) autour du timon (8) et le moyen supplémentaire (20) passe automatiquement d'une position de travail à l'autre position de travail. En disposant le moyen supplémentaire (20) sur le mécanisme de repliage/dépliage (17) plutôt qu'à l'extrémité avant du bâti (6), le report de charge est moins favorable.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Charrue (1) semi-portée réversible hors-raie destinée à être reliée à un tracteur (2) au moyen d'une tête d'attelage (3) et comportant un bâti (6) portant des corps de labour (7), un timon (8) et un dispositif de retournement (9), ledit bâti (6) s'appuyant sur le sol par l'intermédiaire d'au moins une roue (10) apte à déplacer en hauteur la partie arrière dudit bâti (6), ***caractérisée en ce qu'**elle* présente un moyen supplémentaire (20) permettant de lever respectivement d'abaisser la partie avant dudit bâti (6) lors de l'opération de sortie de terre respectivement de mise en terre desdits corps de labour (7) et que ledit moyen supplémentaire (20) sert de roue de contrôle de profondeur en roulant sur le terrain non labouré durant le labour.

2. Charrue selon la revendication 1, ***caractérisée en ce que*** ledit moyen supplémentaire (20) reste en appui sur le sol lors des demi-tours.

3. Charrue selon la revendication 1 ou 2, ***caractérisée en ce que*** ledit moyen supplémentaire (20) est libre en rotation autour d'une articulation d'axe sensiblement vertical (24).

4. Charrue selon l'une quelconque des revendications 1 à 3, ***caractérisée en ce que*** ledit moyen supplémentaire (20) reste au sol pour les opérations de repliage et de dépliage.

5. Charrue selon l'une quelconque des revendications 1 à 4, ***caractérisée en ce que*** ledit moyen supplémentaire (20) est monté sur une partie tournante de ladite charrue (1).

6. Charrue selon l'une quelconque des revendications 1 à 5, ***caractérisée en ce que*** ledit moyen supplémentaire (20) s'étend sensiblement dans le voisinage du premier corps (7).

7. Charrue selon l'une quelconque des revendications 1 à 6, ***caractérisée en ce que*** ledit moyen supplémentaire (20) est commandé par au moins un actionneur (21).

8. Charrue selon l'une quelconque des revendications 1 à 7, ***caractérisée en ce que*** ledit moyen supplémentaire (20) comporte des bielles (22, 23) réalisant un quadrilatère déformable tel qu'un parallélogramme.

9. Charrue selon l'une quelconque des revendications 1 à 8, ***caractérisée en ce que*** ledit moyen supplémentaire (20) est lié audit bâti (6) au moyen d'une articulation (25), d'axe sensiblement horizontal et parallèle à la direction d'avance (A).

10. Charrue selon la revendication 9, ***caractérisée en ce qu'**un* verrou (27) permet de bloquer la rotation dudit moyen supplémentaire (20) autour de ladite articulation horizontale (25).
